(19) Europäisches Patentamt
European Patent Office
Office européen des brevets

(11) **EP 4 391 418 A1**

(12) **EUROPEAN PATENT APPLICATION**
published in accordance with Art. 153(4) EPC

(43) Date of publication:
**26.06.2024 Bulletin 2024/26**

(21) Application number: **22882561.8**

(22) Date of filing: **22.09.2022**

(51) International Patent Classification (IPC):
**H04B 17/11** $^{(2015.01)}$

(52) Cooperative Patent Classification (CPC):
**H04B 1/40; H04B 17/11; H04L 25/02; H04L 25/03**

(86) International application number:
**PCT/CN2022/120490**

(87) International publication number:
**WO 2023/065950 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.10.2021 CN 202111234396**

(71) Applicant: **Huawei Technologies Co., Ltd.**
**Shenzhen, Guangdong 518129 (CN)**

(72) Inventors:
• **GUAN, Lu**
  **Shenzhen, Guangdong 518129 (CN)**
• **YOU, Yanzhen**
  **Shenzhen, Guangdong 518129 (CN)**
• **SUN, Qiang**
  **Shenzhen, Guangdong 518129 (CN)**
• **DENG, Ailin**
  **Shenzhen, Guangdong 518129 (CN)**

(74) Representative: **Maiwald GmbH**
**Engineering**
**Elisenhof**
**Elisenstrasse 3**
**80335 München (DE)**

(54) **SIGNAL TRANSMISSION APPARATUS AND SIGNAL TRANSMISSION METHOD**

(57) This application provides a signal transmission apparatus and a signal transmission method. In this application, a splitter/combiner unit included in the signal transmission apparatus may replicate a first service signal generated by a baseband processing unit. A first correction unit belonging to a first channel may correct the first service signal by using a first correction coefficient, to obtain a second service signal. A second correction unit belonging to a second channel may correct the first service signal by using a second correction coefficient, to obtain a third service signal. In a communication process, the signal transmission apparatus may perform differentiated compensation on different channels based on different compensation parameters. In this way, good compensation effect is achieved, and communication quality of the signal transmission apparatus is improved.

FIG. 1

## Description

This application claims priority to Chinese Patent Application No. CN202111234396.2, filed with the China National Intellectual Property Administration on October 22, 2021 and entitled "SIGNAL TRANSMISSION APPARATUS AND SIGNAL TRANSMISSION METHOD", which is incorporated herein by reference in its entirety.

## TECHNICAL FIELD

Embodiments of this application relate to the communication field, and in particular, to an interaction method and a related device.

## BACKGROUND

In conventional communication technologies, a channel capacity can be significantly increased by using channel state information at the transceiver (Channel State Information at the transceiver, CSIT). In a communication system using a time division duplex (time division duplex, TDD) technology, because a same frequency band may be used when packets are sent on uplink and downlink channels, reciprocity may be achieved between the uplink and downlink channels. In this way, downlink channel information may be obtained by estimating the uplink channel. Because uplink and downlink radio frequency channels have different responses, channel information obtained by directly using the uplink channel cannot accurately represent channel information obtained by using the downlink channel.

Generally, a remote radio unit (remote radio unit, RRU) of a macro base station using the TDD technology has an internal correction channel. In an internal correction manner, a difference between the uplink and downlink channels, that is, a correction coefficient, is obtained through loopback of a correction signal in the RRU. After obtaining the correction coefficient, a network device compensates for the uplink channel in a baseband, to obtain a downlink channel after a reciprocity error is eliminated.

However, in consideration of power consumption, a volume, costs, and the like, generally, an internal correction channel cannot be added to an indoor RRU, and an internal correction solution of the macro base station cannot be reused. In addition, due to networking costs, the indoor RRU generally uses a method of radio frequency/intermediate frequency/baseband combination to reduce consumption of front-end software and hardware resources, and to reduce the networking costs on a premise of meeting a coverage requirement. In a combination scenario, because a baseband digital channel and an analog channel of the RRU are not in one-to-one relationship, a baseband cannot perform differentiated compensation on radio frequency channels of all pRRUs. Consequently, compensation effect is poor, and communication quality of the network device is affected.

## SUMMARY

Embodiments of this application provide a signal transmission apparatus and a signal transmission method. In a communication process, the signal transmission apparatus may perform differentiated compensation on different channels based on different compensation parameters. In this way, good compensation effect is achieved, and communication quality of the signal transmission apparatus is improved.

A first aspect of this application provides a signal transmission apparatus. The signal transmission apparatus includes a baseband processing unit, a splitter/combiner unit, a first channel, and a second channel. The first channel includes a first correction unit and a first radio frequency unit. The second channel includes a second correction unit and a second radio frequency unit. A first end of the first correction unit is electrically connected to the splitter/combiner unit. A second end of the first correction unit is electrically connected to the first radio frequency unit. The baseband processing unit may generate, based on a service requirement, a service signal corresponding to a service, where the signal is referred to as a first service signal. The baseband processing unit transmits the generated first service signal to the splitter/combiner unit. Further, the splitter/combiner unit schedules the first service signal. After the splitter/combiner unit receives the first service signal sent by the baseband processing unit, the splitter/combiner unit may replicate the first service signal, and separately transmit the first service signal to the first channel and the second channel. The first correction unit and the second correction unit perform corresponding correction processing on the first service signals based on different correction coefficients. The first radio frequency unit performs radio frequency processing on the first service signal on which the first correction unit performs correction processing, and the second radio frequency unit performs radio frequency processing on the first service signal on which the second correction unit performs correction processing, to transmit signals obtained through the radio frequency processing.

In this application, the splitter/combiner unit included in the signal transmission apparatus may replicate the first service signal generated by the baseband processing unit. The first correction unit belonging to the first channel may correct the first service signal by using a first correction coefficient, to obtain a second service signal. The second correction unit belonging to the second channel may correct the first service signal by using a second correction coefficient, to obtain a third service signal. In a communication process, the signal transmission apparatus may perform differentiated compensation on different channels based on different compensation parameters. In this way, good compensation effect is achieved, and communication quality of the signal transmission apparatus is improved.

In a possible implementation of the first aspect, the baseband processing unit may further generate a first calibration signal. After the baseband processing unit generates the first calibration signal, the splitter/combiner unit may further select the first channel to send a first radio frequency signal. The first correction unit may further correct the first calibration signal by using a third correction coefficient, to obtain a first correction signal. The first radio frequency unit may further perform radio frequency processing on the first correction signal, to obtain the first radio frequency signal. The splitter/combiner unit may further select the second channel to receive the first radio frequency signal. Further, after the second radio frequency unit receives the first radio frequency signal, the second correction unit corrects the first radio frequency signal by using a fourth correction coefficient, to obtain a second correction signal. In the possible implementation, the signal transmission apparatus may control a combination switch to select a specified RRU (channel) to transmit and receive calibration signals. A baseband calculates a correction coefficient of a current participating RRU, and performs polling for a plurality of times, to complete calculation of correction coefficients of all RRUs, and obtain through integration a global correction coefficient. Further, the correction coefficient calculated by the baseband processing unit may be represented by a delay, an amplitude, or an initial phase, and compensation is performed in an intermediate frequency of the RRU.

In a possible implementation of the first aspect, the baseband processing unit may further generate a second calibration signal. After the baseband processing unit generates the second calibration signal, the splitter/combiner unit may further select the second channel to send a second radio frequency signal. The splitter/combiner unit may further select the first channel to receive the second radio frequency signal. Further, after the first radio frequency unit receives the second radio frequency signal, the first correction unit corrects the second radio frequency signal by using a fifth correction coefficient, to obtain a third correction signal. In the possible implementation, the signal transmission apparatus may control the combination switch to select the specified RRU (channel) to transmit and receive the calibration signals. The baseband calculates the correction coefficient of the current participating RRU, and performs polling for the plurality of times, to complete calculation of the correction coefficients of all the RRUs, and obtain through integration the global correction coefficient. Further, the correction coefficient calculated by the baseband processing unit may be represented by the delay, the amplitude, or the initial phase, and compensation is performed in the intermediate frequency of the RRU.

In a possible implementation of the first aspect, in this application, due to reciprocity between air interface channels in a TDD system, an air interface channel obtained when a channel 0 of an RRU0 is used for transmission and a channel 0 of an RRU1 is used for receiving is the same as an air interface channel obtained when the channel 0 of the RRU1 is used for transmission and the channel 0 of the RRU0 is used for receiving. In this way, the baseband processing unit may further obtain the first correction coefficient based on the third correction coefficient, the fourth correction coefficient, the fifth correction coefficient, and a sixth correction coefficient, where the first correction coefficient is used to compensate for the first channel. In the possible implementation, a manner of obtaining the first correction coefficient is provided, to improve implementability of the solution.

In a possible implementation of the first aspect, in this application, due to the reciprocity between the air interface channels in the TDD system, the air interface channel obtained when the channel 0 of the RRU0 is used for transmission and the channel 0 of the RRU1 is used for receiving is the same as the air interface channel obtained when the channel 0 of the RRU1 is used for transmission and the channel 0 of the RRU0 is used for receiving. In this way, the baseband processing unit is further configured to obtain the second correction coefficient based on the third correction coefficient, the fourth correction coefficient, the fifth correction coefficient, and the sixth correction coefficient, where the second correction coefficient is used to compensate for the second channel. In the possible implementation, a manner of obtaining the second correction coefficient is provided, to improve implementability of the solution.

In a possible implementation of the first aspect, a first end of a first intermediate frequency unit is electrically connected to the baseband processing unit. A second end of the first intermediate frequency unit is electrically connected to the splitter/combiner unit. An output end of the splitter/combiner unit is electrically connected to a first correction and compensation unit and a second correction and compensation unit separately. An input end of the first radio frequency unit is electrically connected to an output end of the first correction and compensation unit. An input end of the second radio frequency unit is electrically connected to an output end of the second correction and compensation unit. After the baseband processing unit outputs the first service signal, the first intermediate frequency unit may perform intermediate frequency processing on the first service signal, and send the first service signal on which intermediate frequency processing is performed to the splitter/combiner unit. Then, the splitter/combiner unit replicates the first service signal and separately transmits the first service signal to the first correction and compensation unit and the second correction and compensation unit. Then, the first radio frequency unit and the second radio frequency unit each perform radio frequency processing on a corrected service signal. An implementation of the signal transmission apparatus including an intermediate frequency unit is provided, to improve implementability of the solution.

In a possible implementation of the first aspect, the baseband processing unit is electrically connected to the splitter/combiner unit. A first end of a second intermediate frequency unit is electrically connected to the splitter/combiner unit. A second end of the second intermediate frequency unit is electrically connected to the first correction unit. A first end of a third intermediate frequency unit is electrically connected to the splitter/combiner unit. A second end of the third intermediate frequency unit is electrically connected to the second correction unit. The input end of the first radio frequency unit is electrically connected to the output end of the first correction and compensation unit. The input end of the second radio frequency unit is electrically connected to the output end of the second correction and compensation unit. In the possible implementation, after the baseband processing unit outputs the first service signal to the splitter/combiner unit, the splitter/combiner unit replicates the first service signal and separately transmits the first service signal to the second intermediate frequency unit and the third intermediate frequency unit. The second intermediate frequency unit and the third intermediate frequency unit may each perform intermediate frequency processing on the first service signal, and respectively send the first service signals on which intermediate frequency processing is performed to the first correction and compensation unit and the second correction and compensation unit. Then, the first radio frequency unit and the second radio frequency unit each perform radio frequency processing on a corrected service signal. An implementation of the signal transmission apparatus including intermediate frequency units is provided. The second intermediate frequency unit and the third intermediate frequency unit that belong to different channels may choose to perform differentiated intermediate frequency processing or same intermediate frequency processing on the first service signals, to improve flexibility of the solution.

In a possible implementation of the first aspect, the baseband processing unit is electrically connected to the splitter/combiner unit. The first end of the second intermediate frequency unit is electrically connected to the splitter/combiner unit. The splitter/combiner unit is electrically connected to the first correction and compensation unit and the second correction and compensation unit separately. A first end of a fourth intermediate frequency unit is electrically connected to the first correction unit. A second end of the fourth intermediate frequency unit is electrically connected to the first radio frequency unit. A first end of the fifth intermediate frequency unit is electrically connected to the second correction unit. A second end of the fifth intermediate frequency unit is electrically connected to the second radio frequency unit. In the possible implementation, after the baseband processing unit outputs the first service signal to the splitter/combiner unit, the splitter/combiner unit replicates the first service signal and separately transmits the first service signal to the first correction and compensation unit and the second correction and compensation unit. The fourth intermediate frequency unit and the fifth intermediate frequency unit may respectively perform intermediate frequency processing on a first correction signal and a second correction signal that are obtained through correction and compensation, and respectively send the signals on which intermediate frequency processing is performed to the first radio frequency unit and the second radio frequency unit. Then, the first radio frequency unit and the second radio frequency unit each perform radio frequency processing on a corrected service signal. An implementation of the signal transmission apparatus including intermediate frequency units is provided. The fourth intermediate frequency unit and the fifth intermediate frequency unit that belong to different channels may choose to perform differentiated intermediate frequency processing or same intermediate frequency processing on the first service signals, to improve flexibility of the solution.

In a possible implementation of the first aspect, the baseband processing unit includes a baseband logical cell, a first baseband processing module, and a second baseband processing module. The baseband logical cell is electrically connected to a first end of the splitter/combiner unit. A first end of the first baseband processing module and a first end of the second baseband processing module each are electrically connected to a second end of the splitter/combiner unit. A second end of the first baseband processing module is electrically connected to the first correction unit. A second end of the second baseband processing module is electrically connected to the second correction unit. In the possible implementation, an implementation of the signal transmission apparatus is provided, to improve implementability of the solution. Optionally, in the possible implementation, the signal transmission apparatus may further include a sixth intermediate frequency unit and a seventh intermediate frequency unit. The sixth intermediate frequency unit may be located between the splitter/combiner unit and the first baseband processing module, or may be located between the first baseband processing module and the first correction unit, or may be located between the first correction unit and the first radio frequency unit. This is not specifically limited herein. Similarly, the seventh intermediate frequency unit may be located between the splitter/combiner unit and the second baseband processing module, or may be located between the second baseband processing module and the second correction unit, or may be located between the second correction unit and the second radio frequency unit. This is not specifically limited herein.

A second aspect of this application provides a signal transmission method. The method is applied to a signal transmission apparatus. The signal transmission apparatus includes a baseband processing unit, a splitter/combiner unit, a first channel, and a second channel. The first channel includes a first correction unit and a first radio frequency unit. The second channel includes a second correction unit and a second radio frequency unit. A first end of the first correction unit is electrically connected to the splitter/combiner unit. A second end of the first correction unit is electrically connected to the first radio frequency unit. The baseband processing unit may generate, based on a service requirement, a service signal corresponding to a service, where the signal is referred to as a first service signal. The baseband processing unit transmits the generated first service signal to the splitter/combiner unit. Further, the splitter/combiner unit schedules the first service signal. After the splitter/combiner unit receives the first service signal sent by the baseband processing unit, the splitter/combiner unit may replicate the first service signal, and separately transmit the first service signal to the first channel and the second channel. The first correction unit and the second correction unit perform corresponding correction processing on the first service signals based on different correction coefficients. The first radio frequency unit performs radio frequency processing on the first service signal on which the first correction unit performs correction processing, and the second radio frequency unit performs radio frequency processing on the first service signal on which the second correction unit performs correction processing, to transmit signals obtained through the radio frequency processing.

In this application, the splitter/combiner unit included in the signal transmission apparatus may replicate the first service signal generated by the baseband processing unit. The first correction unit belonging to the first channel may correct the first service signal by using a first correction coefficient, to obtain a second service signal. The second correction unit belonging to the second channel may correct the first service signal by using a second correction coefficient, to obtain a third service signal. In a communication process, the signal transmission apparatus may perform differentiated compensation on different channels based on different compensation parameters. In this way, good compensation effect is achieved, and communication quality of the signal transmission apparatus is improved.

In a possible implementation of the second aspect, the baseband processing unit may further generate a first calibration signal. After the baseband processing unit generates the first calibration signal, the splitter/combiner unit may further select the first channel to send a first radio frequency signal. The first correction unit may further correct the first calibration signal by using a third correction coefficient, to obtain a first correction signal. The first radio frequency unit may further perform radio frequency processing on the first correction signal, to obtain the first radio frequency signal. The splitter/combiner unit may further select the second channel to receive the first radio frequency signal. Further, after the second radio frequency unit receives the first radio frequency signal, the second correction unit corrects the first radio frequency signal by using a fourth correction coefficient, to obtain a second correction signal. In the possible implementation, the signal transmission apparatus may control a combination switch to select a specified RRU (channel) to transmit and receive calibration signals. A baseband calculates a correction coefficient of a current participating RRU, and performs polling for a plurality of times, to complete calculation of correction coefficients of all RRUs, and obtain through integration a global correction coefficient. Further, the correction coefficient calculated by the baseband processing unit may be represented by a delay, an amplitude, or an initial phase, and compensation is performed in an intermediate frequency of the RRU.

In a possible implementation of the second aspect, the baseband processing unit may further generate a second calibration signal. After the baseband processing unit generates the second calibration signal, the splitter/combiner unit may further select the second channel to send a second radio frequency signal. The splitter/combiner unit may further select the first channel to receive the second radio frequency signal. Further, after the first radio frequency unit receives the second radio frequency signal, the first correction unit corrects the second radio frequency signal by using a fifth correction coefficient, to obtain a third correction signal. In the possible implementation, the signal transmission apparatus may control the combination switch to select the specified RRU (channel) to transmit and receive the calibration signals. The baseband calculates the correction coefficient of the current participating RRU, and performs polling for the plurality of times, to complete calculation of the correction coefficients of all the RRUs, and obtain through integration the global correction coefficient. Further, the correction coefficient calculated by the baseband processing unit may be represented by the delay, the amplitude, or the initial phase, and compensation is performed in the intermediate frequency of the RRU.

In a possible implementation of the second aspect, in this application, due to reciprocity between air interface channels in a TDD system, an air interface channel obtained when a channel 0 of an RRU0 is used for transmission and a channel 0 of an RRU1 is used for receiving is the same as an air interface channel obtained when the channel 0 of the RRU1 is used for transmission and the channel 0 of the RRU0 is used for receiving. In this way, the baseband processing unit may further obtain the first correction coefficient based on the third correction coefficient, the fourth correction coefficient, the fifth correction coefficient, and a sixth correction coefficient, where the first correction coefficient is used to compensate for the first channel. In the possible implementation, a manner of obtaining the first correction coefficient is provided, to improve implementability of the solution.

In a possible implementation of the second aspect, in this application, due to the reciprocity between the air interface channels in the TDD system, the air interface channel obtained when the channel 0 of the RRU0 is used for transmission and the channel 0 of the RRU1 is used for receiving is the same as the air interface channel obtained when the channel 0 of the RRU1 is used for transmission and the channel 0 of the RRU0 is used for receiving. In this way, the baseband processing unit is further configured to obtain the second correction coefficient based on the third correction coefficient, the fourth correction coefficient, the fifth correction coefficient, and the sixth correction coefficient, where the second correction coefficient is used to compensate for the second channel. In the possible implementation, a manner of obtaining the second correction coefficient is provided, to improve implementability of the solution.

In a possible implementation of the second aspect, a first end of a first intermediate frequency unit is electrically connected to the baseband processing unit. A second end of the first intermediate frequency unit is electrically connected to the splitter/combiner unit. An output end of the splitter/combiner unit is electrically connected to a first correction and compensation unit and a second correction and compensation unit separately. An input end of the first radio frequency unit is electrically connected to an output end of the first correction and compensation unit. An input end of the second radio frequency unit is electrically connected to an output end of the second correction and compensation unit. After the baseband processing unit outputs the first service signal, the first intermediate frequency unit may perform intermediate frequency processing on the first service signal, and send the first service signal on which intermediate frequency processing is performed to the splitter/combiner unit. Then, the splitter/combiner unit replicates the first service signal and separately transmits the first service signal to the first correction and compensation unit and the second correction and compensation unit. Then, the first radio frequency unit and the second radio frequency unit each perform radio frequency processing on a corrected service signal. An implementation of the signal transmission apparatus including an intermediate frequency unit is provided, to improve implementability of the solution.

In a possible implementation of the second aspect, the baseband processing unit is electrically connected to the splitter/combiner unit. A first end of a second intermediate frequency unit is electrically connected to the splitter/combiner unit. A second end of the second intermediate frequency unit is electrically connected to the first correction unit. A first end of a third intermediate frequency unit is electrically connected to the splitter/combiner unit. A second end of the third intermediate frequency unit is electrically connected to the second correction unit. The input end of the first radio frequency unit is electrically connected to the output end of the first correction and compensation unit. The input end of the second radio frequency unit is electrically connected to the output end of the second correction and compensation unit. In the possible implementation, after the baseband processing unit outputs the first service signal to the splitter/combiner unit, the splitter/combiner unit replicates the first service signal and separately transmits the first service signal to the second intermediate frequency unit and the third intermediate frequency unit. The second intermediate frequency unit and the third intermediate frequency unit may each perform intermediate frequency processing on the first service signal, and respectively send the first service signals on which intermediate frequency processing is performed to the first correction and compensation unit and the second correction and compensation unit. Then, the first radio frequency unit and the second radio frequency unit each perform radio frequency processing on a corrected service signal. An implementation of the signal transmission apparatus including intermediate frequency units is provided. The second intermediate frequency unit and the third intermediate frequency unit that belong to different channels may choose to perform differentiated intermediate frequency processing or same intermediate frequency processing on the first service signals, to improve flexibility of the solution.

In a possible implementation of the second aspect, the baseband processing unit is electrically connected to the splitter/combiner unit. The first end of the second intermediate frequency unit is electrically connected to the splitter/combiner unit. The splitter/combiner unit is electrically connected to the first correction and compensation unit and the second correction and compensation unit separately. A first end of a fourth intermediate frequency unit is electrically connected to the first correction unit. A second end of the fourth intermediate frequency unit is electrically connected to the first radio frequency unit. A first end of the fifth intermediate frequency unit is electrically connected to the second correction unit. A second end of the fifth intermediate frequency unit is electrically connected to the second radio frequency unit. In the possible implementation, after the baseband processing unit outputs the first service signal to the splitter/combiner unit, the splitter/combiner unit replicates the first service signal and separately transmits the first service signal to the first correction and compensation unit and the second correction and compensation unit. The fourth intermediate frequency unit and the fifth intermediate frequency unit may respectively perform intermediate frequency processing on a first correction signal and a second correction signal that are obtained through correction and compensation, and respectively send the signals on which intermediate frequency processing is performed to the first radio frequency unit and the second radio frequency unit. Then, the first radio frequency unit and the second radio frequency unit each perform radio frequency processing on a corrected service signal. An implementation of the signal transmission apparatus including intermediate frequency units is provided. The fourth intermediate frequency unit and the fifth intermediate frequency unit that belong to different channels may choose to perform differentiated intermediate frequency processing or same intermediate frequency processing on the first service signals, to improve flexibility of the solution.

In a possible implementation of the second aspect, the baseband processing unit includes a baseband logical cell, a first baseband processing module, and a second baseband processing module. The baseband logical cell is electrically connected to a first end of the splitter/combiner unit. A first end of the first baseband processing module and a first end of the second baseband processing module each are electrically connected to a second end of the splitter/combiner unit. A second end of the first baseband processing module is electrically connected to the first correction unit. A second end of the second baseband processing module is electrically connected to the second correction unit. In the possible implementation, an implementation of the signal transmission apparatus is provided, to improve implementability of the solution. Optionally, in the possible implementation, the signal transmission apparatus may further include a sixth intermediate frequency unit and a seventh intermediate frequency unit. The sixth intermediate frequency unit may be located between the splitter/combiner unit and the first baseband processing module, or may be located between the first baseband processing module and the first correction unit, or may be located between the first correction unit and the first radio frequency unit. This is not specifically limited herein. Similarly, the seventh intermediate frequency unit may be located between the splitter/combiner unit and the second baseband processing module, or may be located between the second baseband processing module and the second correction unit, or may be located between the second correction unit and the second radio frequency unit. This is not specifically limited herein.

A third aspect of this application provides a network system. The network system includes the signal transmission apparatus described in any one of the first aspect or the possible implementations of the first aspect.

According to the foregoing technical solutions, it can be learned that embodiments of this application have the following advantages:

In this application, the splitter/combiner unit included in the signal transmission apparatus may replicate the first service signal generated by the baseband processing unit. The first correction unit belonging to the first channel may correct the first service signal by using the first correction coefficient, to obtain the second service signal. The second correction unit belonging to the second channel may correct the first service signal by using the second correction coefficient, to obtain the third service signal. In the communication process, the signal transmission apparatus may perform differentiated compensation on the different channels based on the different compensation parameters. In this way, good compensation effect is achieved, and communication quality of the signal transmission apparatus is improved.

**BRIEF DESCRIPTION OF DRAWINGS**

FIG. 1 is a schematic diagram of a structure of a signal transmission apparatus according to this application;

FIG. 2 is a schematic application diagram of a signal transmission apparatus according to this application;

FIG. 3 is another schematic application diagram of a signal transmission apparatus according to this application;

FIG. 4 is another schematic diagram of a structure of a signal transmission apparatus according to this application;

FIG. 5 is another schematic diagram of a structure of a signal transmission apparatus according to this application;

FIG. 6 is another schematic diagram of a structure of a signal transmission apparatus according to this application; and

FIG. 7 is another schematic diagram of a structure of a signal transmission apparatus according to this application.

**DESCRIPTION OF EMBODIMENTS**

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, the claims, and the accompanying drawings in this application, the terms "first", "second", and the like are intended to distinguish between similar objects but do not necessarily indicate a specific order or sequence. It should be understood that the data termed in such a way are interchangeable in appropriate circumstances so that embodiments described herein can be implemented in other orders than the order illustrated or described herein. In addition, the terms "include", "contain" and any other variants mean to cover a non-exclusive inclusion, for example, a process, a method, a system, a product, or a device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or the numbers. An execution sequence of the steps in the procedure that have been named or numbered can be changed based on a technical objective to be achieved, provided that same or similar technical effects can be achieved.

In conventional communication technologies, a channel capacity can be significantly increased by using channel state information at the transceiver (Channel State Information at the transceiver, CSIT). In a communication system using a time division duplex (time division duplex, TDD) technology, because a same frequency band may be used when packets are sent on uplink and downlink channels, reciprocity may be achieved between the uplink and downlink channels. In this way, downlink channel information may be obtained by estimating the uplink channel. Because uplink and downlink radio frequency channels have different responses, channel information obtained by directly using the uplink channel cannot accurately represent channel information obtained by using the downlink channel.

Generally, a remote radio unit (remote radio unit, RRU) of a macro base station using the TDD technology has an internal correction channel. In an internal correction manner, a difference between the uplink and downlink channels, that is, a correction coefficient, is obtained through loopback of a correction signal in the RRU. After obtaining the correction coefficient, a network device compensates for the uplink channel in a baseband, to obtain a downlink channel after a reciprocity error is eliminated.

However, in consideration of power consumption, a volume, costs, and the like, generally, an internal correction channel cannot be added to an indoor RRU, and an internal correction solution of the macro base station cannot be reused. In addition, due to networking costs, the indoor RRU generally uses a method of radio frequency/intermediate frequency/baseband combination to reduce consumption of front-end software and hardware resources, and to reduce the networking costs on a premise of meeting a coverage requirement. In a combination scenario, because a baseband digital channel and an analog channel of the RRU are not in one-to-one relationship, a baseband cannot perform differentiated compensation on radio frequency channels of all pRRUs. Consequently, compensation effect is poor, and communication quality of the network device is affected.

In view of the foregoing problem that exists in a communication process of an existing network device, this application provides a signal transmission apparatus, a signal transmission method, and a communication system. In a communication process, the signal transmission apparatus may perform differentiated compensation on different channels based on different compensation parameters. In this way, good compensation effect is achieved, and communication quality of the signal transmission apparatus is improved.

The following separately describes the signal transmission apparatus, the signal transmission method, and the communication system provided in this application in detail with reference to the accompanying drawings in this application. The signal transmission apparatus provided in this application is first described.

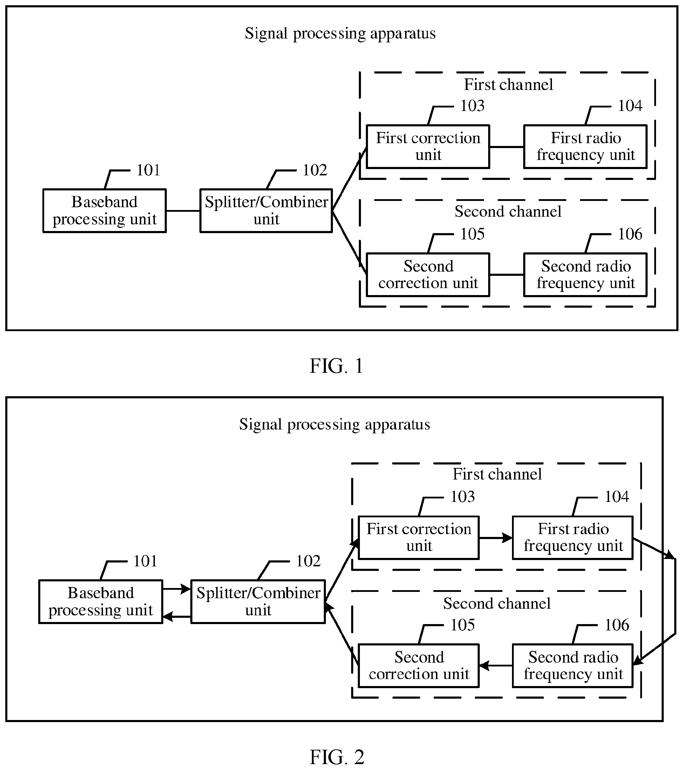

FIG. 1 is a schematic diagram of a structure of a signal transmission apparatus according to an embodiment of this application.

The signal transmission apparatus 10 provided in this application includes at least a baseband processing unit 101, a splitter/combiner unit 102, a first channel, and a second channel. The first channel includes a first correction unit 103 and a first radio frequency unit 104. The second channel includes a second correction unit 105 and a second radio frequency unit 106.

The following describes in detail a connection relationship between units in the signal transmission apparatus provided in this application.

In this application, an output end of the baseband processing unit 101 is electrically connected to the splitter/combiner unit 102. A first end of the first correction unit 103 is electrically connected to the splitter/combiner unit 102. A second end of the first correction unit 103 is electrically connected to the first radio frequency unit 104.

The following describes in detail functions of the units in the signal transmission apparatus provided in this application.

In this application, the baseband processing unit 101 is configured to generate a first service signal.

The baseband processing unit may generate, based on a service requirement, a service signal corresponding to a service, where the signal is referred to as the first service signal. The baseband processing unit 101 transmits the generated first service signal to the splitter/combiner unit 102. Further, the splitter/combiner unit schedules the first service signal.

In this application, the splitter/combiner unit 102 is configured to replicate the first service signal.

After the splitter/combiner unit 102 receives the first service signal sent by the baseband processing unit, the splitter/combiner unit 102 may replicate the first service signal, and separately transmit the first service signal to the first channel and the second channel. The first correction unit 103 and the second correction unit 105 perform corresponding correction processing on the first service signals based on different correction coefficients.

In this application, the first correction unit is configured to correct the first service signal by using a first correction coefficient, to obtain a second service signal. Similarly, the second correction unit is configured to correct the first service signal by using a second correction coefficient, to obtain a third service signal.

In the signal transmission apparatus, after the first channel and the second channel each receive the first service signal, in the first channel, the first correction unit 103 may perform correction processing on the first service signal based on the first correction coefficient, and in the second channel, the second correction unit 105 may perform correction processing on the second service signal based on the second correction coefficient. In this case, the signal transmission apparatus may perform differentiated compensation on different channels based on different compensation parameters. In this way, good compensation effect is achieved, and communication quality of the signal transmission apparatus is improved.

In this application, the first radio frequency unit is configured to perform radio frequency processing on the second service signal. Similarly, the second radio frequency unit is configured to perform radio frequency processing on the third service signal.

In the signal transmission apparatus, the first radio frequency unit performs radio frequency processing on the first service signal on which the first correction unit performs correction processing, and the second radio frequency unit performs radio frequency processing on the first service signal on which the second correction unit performs correction processing, to transmit signals obtained through the radio frequency processing.

In this application, it is assumed that the signal transmission apparatus uses a combination architecture. At a downlink moment in the combination architecture, FIG. 1 is used as an example. Service data (the first service signal) is replicated into a plurality of copies by the splitter/combiner unit, and then the plurality of copies are respectively transmitted to RRUs. Each RRU processes baseband data by using a correction unit (for example, the first correction unit or the second correction unit) and a radio frequency unit (which may include an antenna) and then transmits the baseband data. At an uplink moment in the combination architecture, FIG. 1 is also used as an example. The service data may be transmitted by the correction unit to the splitter/combiner unit, and combined by the splitter/combiner unit. Optionally, a combining method may be a combining manner such as maximum ratio combining or equal gain combining. Another combining manner may alternatively be used as the combining method. This is not specifically limited herein. A combined signal may be transmitted to the baseband processing unit for processing. In this case, physically, a plurality of RRUs are deployed in an entire combination architecture. For example, if N RRUs are deployed and each RRU has M antennas, a quantity of air interface antennas is M*N. However, after a plurality of pRRUs are combined, only M antennas are available in a baseband. Therefore, from a perspective of the baseband, the entire combination architecture is actually a cell with M transmit antennas and M receive antennas.

It may be understood that, optionally, quantities of baseband processing units 101, splitter/combiner units 102, first correction units 103, first radio frequency units 104, second correction units 105, and second radio frequency units 106 included in the signal transmission apparatus shown in FIG. 1 in this application are merely examples for description. In an actual application process, the signal transmission apparatus may include more baseband processing units, more splitter/combiner units, more correction units, and/or more radio frequency units than those shown in FIG. 1. This is not specifically limited herein.

In this application, the splitter/combiner unit included in the signal transmission apparatus may replicate the first service signal generated by the baseband processing unit. The first correction unit belonging to the first channel may correct the first service signal by using the first correction coefficient, to obtain the second service signal. The second correction unit belonging to the second channel may correct the first service signal by using the second correction coefficient, to obtain the third service signal. In a communication process, the signal transmission apparatus may perform differentiated compensation on different channels based on different compensation parameters. In this way, good compensation effect is achieved, and communication quality of the signal transmission apparatus is improved.

In this application, there is a specific implementation of obtaining the first correction coefficient of the first correction unit and the second correction coefficient of the second unit. The possible implementation is described in the following example.

In this application, in a service signal transmission process, each channel simultaneously receives a signal at an uplink moment, and simultaneously sends a signal at a downlink moment. In other words, each RRU simultaneously receives the signal at the uplink moment, and each pRRU simultaneously transmits the signal at the downlink moment. In a process of correcting a correction coefficient of each channel, the first channel sends a correction signal, and the second channel receives the correction signal. In other words, some RRUs transmit the correction signal, and some RRUs receive the correction signal.

In the signal transmission apparatus and the signal transmission method provided in this application, a combination switch is first controlled to select a specified RRU (channel) for transmission and receiving. A baseband calculates a correction coefficient of a current participating RRU, and performs polling for a plurality of times, to complete calculation of correction coefficients of all RRUs, and obtain through integration a global correction coefficient. The correction coefficient calculated by the baseband is represented by a delay, an amplitude, or an initial phase, and compensation is performed in an intermediate frequency of the RRU.

In a possible implementation, optionally, the baseband processing unit may further generate a first calibration signal. After the baseband processing unit generates the first calibration signal, the splitter/combiner unit may further select the first channel to send a first radio frequency signal. The first correction unit may further correct the first calibration signal by using a third correction coefficient, to obtain a first correction signal. The first radio frequency unit may further perform radio frequency processing on the first correction signal, to obtain the first radio frequency signal. The splitter/combiner unit may further select the second channel to receive the first radio frequency signal. Further, after the second radio frequency unit receives the first radio frequency signal, the second correction unit corrects the first radio frequency signal by using a fourth correction coefficient, to obtain a second correction signal.

For example, in the signal transmission apparatus shown in FIG. 2, at a moment T0, the baseband processing unit 101 generates a correction reference signal and sends the correction reference signal to the splitter/combiner unit 102. The splitter/combiner unit 102 no longer replicates a downlink signal (only the first channel, that is, an RRUO, is selected in a downlink), and only transfers the correction reference signal to the RRU0. The RRU0 is set to a transmission state. The correction reference signal is transmitted to an air interface by using the first radio frequency unit (including an antenna) 104 in the RRU.

At the moment T0, an RRU1 (the second channel) is set to a receiving state. The RRU1 receives the correction reference signal transmitted by the RRUO, performs receiving processing on the correction reference signal, and transfers a processed signal to the splitter/combiner unit 102. In this case, the splitter/combiner unit 102 only receives a signal of the RRU1 (only the signal of the RRU1 is selected in an uplink). The splitter/combiner unit transfers the correction reference signal received by the RRU1 to the baseband processing unit 101.

The baseband processing unit 101 may obtain an equivalent channel in an entire loopback process by performing channel estimation on the correction reference signal. The following formula may be obtained by using an example in which a channel 0 of the RRU0 is used for transmission and a channel 0 of the RRU1 is used for receiving:

$$H_{01} = H_{0,DL} H_{Air} H_{1,UL}$$

$H_{01}$ represents a channel estimated value obtained after a reference signal is sent by the RRUO, transmitted through an air interface, and received by the RRU1. $H_0$ represents a transmit channel response value of the channel 0 of the RRU0. $H_{Air}$ represents an air interface channel response value between the channel 0 of the RRU0 and the channel 0 of the RRU1. $H_{1,UL}$ represents a receive channel response value of the channel 0 of the RRU1.

In a possible implementation, optionally, the baseband processing unit may further generate a second calibration signal. After the baseband processing unit generates the second calibration signal, the splitter/combiner unit may further select the second channel to send a second radio frequency signal. The splitter/combiner unit may further select the first channel to receive the second radio frequency signal. Further, after the first radio frequency unit receives the second radio frequency signal, the first correction unit corrects the second radio frequency signal by using a fifth correction coefficient, to obtain a third correction signal.

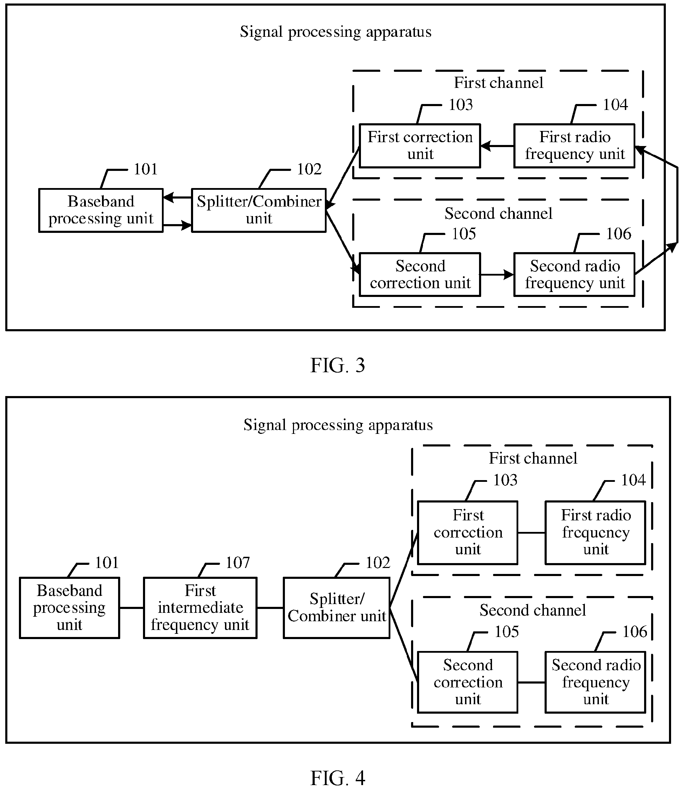

For example, in the signal transmission apparatus shown in FIG. 3, at a moment T1, the baseband processing unit 101 generates a correction reference signal and sends the correction reference signal to the splitter/combiner unit. The splitter/combiner unit 102 no longer replicates a downlink signal (only the second path, that is, an RRU1, is selected in a downlink), and only transfers the correction reference signal to the RRU1. The RRU1 is set to a transmission state. The correction reference signal is transmitted to an air interface by using the second radio frequency unit 106 (including an antenna) in the RRU.

At the moment T1, an RRU0 (the first channel) is set to a receiving state. The RRU0 receives the correction reference signal transmitted by the RRU1, performs receiving processing on the correction reference signal, and transfers a processed signal to the splitter/combiner unit. In this case, the splitter/combiner unit only receives a signal of the RRU0 (only the first channel, that is, the RRUO, is selected in an uplink). The splitter/combiner unit 102 transfers the correction reference signal received by the RRU0 to the baseband processing unit 101.

The baseband processing unit 101 may obtain an equivalent channel in an entire loopback process by performing channel estimation on the correction reference signal. The following formula is obtained by using an example in which a channel 0 of the RRU1 is used for transmission and a channel 0 of the RRU0 is used for receiving:

$$H_{10} = H_{1,DL} H_{Air} H_{0,UL}$$

$H_{10}$ represents a channel estimated value obtained after the reference signal is sent by the channel 0 of the RRU1, transmitted through the air interface, and received by the channel 0 of the RRU0. $H_{1,DL}$ represents a transmit channel response value of the channel 1 of the RRU1. $H_{Air}$ represents an air interface channel response value between the channel 0 of the RRU1 and the channel 0 of the RRU0. $H_{0,UL}$ represents a receive channel response value of the channel 0 of the RRU1.

Specific processes of obtaining $H_{01}$ and $H_{10}$ are described in embodiments shown in FIG. 2 and FIG. 3. The following describes in detail specific processes of obtaining the first correction coefficient and the second correction coefficient based on $H_{01}$ and $H_{10}$.

In this application, due to reciprocity between air interface channels in a TDD system, an air interface channel obtained when the channel 0 of the RRU0 is used for transmission and the channel 0 of the RRU1 is used for receiving is the same as an air interface channel obtained when the channel 0 of the RRU1 is used for transmission and the channel 0 of the RRU0 is used for receiving, and both are $H_{Air}$.

A baseband unit may calculate a reciprocity correction coefficient β between the channel 0 of the RRU0 and the channel 0 of the RRU1 based on estimated equivalent channels respectively obtained at the moments T0 and T1. The formula is as follows:

$$\beta = \frac{H_{01}}{H_{10}} = \frac{H_{0,DL}H_{Air}H_{1,UL}}{H_{1,DL}H_{Air}H_{0,UL}} = \frac{\frac{H_{1,UL}}{H_{1,DL}}}{\frac{H_{0,UL}}{H_{0,DL}}}$$

The correction coefficient corresponds to a correction and compensation value of the channel 0 of the RRU1. The channel 0 of the RRU0 is used as a basis reference of the reciprocity correction coefficient.

In this application, optionally, during actual application, the signal transmission apparatus may further include a channel other than the first channel and the second channel. This is not specifically limited herein. A correction coefficient between any channel, any RRU, and a common reference may be obtained in the manner described in the foregoing embodiment.

In this application, the baseband sends the correction coefficient to the RRU, and compensation is performed in intermediate frequency digital domain of the RRU. Because channel estimation is generally performed in frequency domain, the correction coefficient directly obtained by the baseband is a correction coefficient in frequency domain. If an intermediate frequency of a pRRU does not have a frequency domain compensation capability (where in an eCPRI splitting scenario, an IFU has a frequency domain compensation point), the correction coefficient needs to be converted into a correction coefficient in time domain for correction coefficient compensation in time domain.

In this application, the signal transmission apparatus may further include an intermediate frequency unit. The signal transmission apparatus including the intermediate frequency unit has a plurality of structures. The following embodiments describe the plurality of structures of the signal transmission apparatus in detail.

Structure 1:

FIG. 4 is a schematic diagram of a structure of a signal transmission apparatus according to this application.

Refer to FIG. 4. The signal transmission apparatus further includes a first intermediate frequency unit 107.

In this application, a first end of the first intermediate frequency unit is electrically connected to the baseband processing unit. A second end of the first intermediate frequency unit is electrically connected to the splitter/combiner unit. An output end of the splitter/combiner unit is electrically connected to a first correction and compensation unit and a second correction and compensation unit separately. An input end of the first radio frequency unit is electrically connected to an output end of the first correction and compensation unit. An input end of the second radio frequency unit is electrically connected to an output end of the second correction and compensation unit.

In the possible implementation, after the baseband processing unit outputs the first service signal, the first intermediate frequency unit may perform intermediate frequency processing on the first service signal, and send the first service signal on which intermediate frequency processing is performed to the splitter/combiner unit. Then, the splitter/combiner unit replicates the first service signal and separately transmits the first service signal to the first correction and compensation unit and the second correction and compensation unit. Then, the first radio frequency unit and the second radio frequency unit each perform radio frequency processing on a corrected service signal. An implementation of the signal transmission apparatus including an intermediate frequency unit is provided, to improve implementability of the solution.

Structure 2:

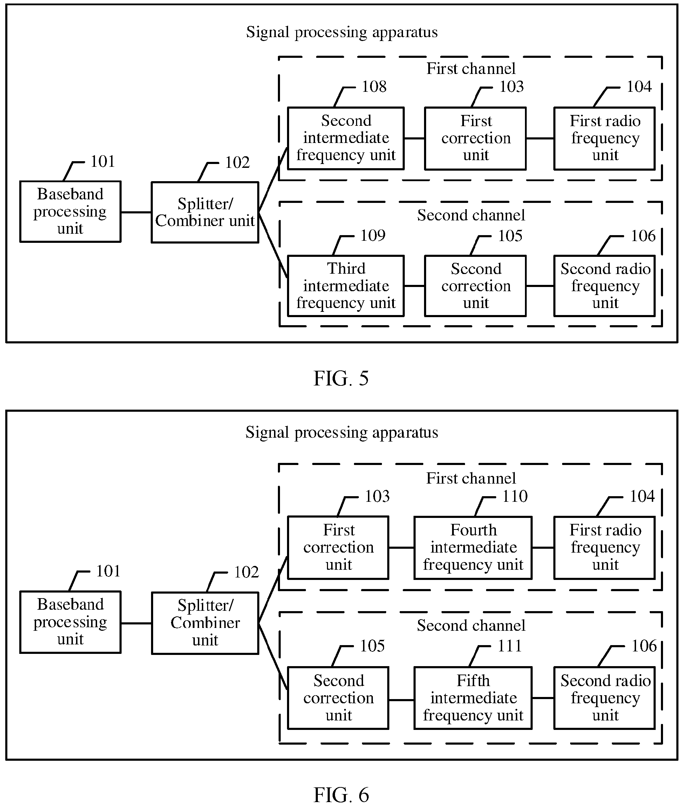

FIG. 5 is a schematic diagram of a structure of a signal transmission apparatus according to this application.

Refer to FIG. 5. The signal transmission apparatus further includes a second intermediate frequency unit 108 and a third intermediate frequency unit 109.

In this application, the baseband processing unit is electrically connected to the splitter/combiner unit. A first end of the second intermediate frequency unit is electrically connected to the splitter/combiner unit. A second end of the second intermediate frequency unit is electrically connected to the first correction unit. A first end of the third intermediate frequency unit is electrically connected to the splitter/combiner unit. A second end of the third intermediate frequency unit is electrically connected to the second correction unit. The input end of the first radio frequency unit is electrically connected to the output end of the first correction and compensation unit. The input end of the second radio frequency unit is electrically connected to the output end of the second correction and compensation unit.

In the possible implementation, after the baseband processing unit outputs the first service signal to the splitter/combiner unit, the splitter/combiner unit replicates the first service signal and separately transmits the first service signal to the second intermediate frequency unit and the third intermediate frequency unit. The second intermediate frequency unit and the third intermediate frequency unit may each perform intermediate frequency processing on the first service signal, and respectively send the first service signals on which intermediate frequency processing is performed to the first correction and compensation unit and the second correction and compensation unit. Then, the first radio frequency unit and the second radio frequency unit each perform radio frequency processing on a corrected service signal. An implementation of the signal transmission apparatus including intermediate frequency units is provided. The second intermediate frequency unit and the third intermediate frequency unit that belong to different channels may choose to perform differentiated intermediate frequency processing or same intermediate frequency processing on the first service signals, to improve flexibility of the solution.

Structure 3:

FIG. 6 is a schematic diagram of a structure of a signal transmission apparatus according to this application.

Refer to FIG. 6. The signal transmission apparatus further includes a fourth intermediate frequency unit 110 and a fifth intermediate frequency unit 111.

In this application, the baseband processing unit is electrically connected to the splitter/combiner unit. The first end of the second intermediate frequency unit is electrically connected to the splitter/combiner unit. The splitter/combiner unit is electrically connected to the first correction and compensation unit and the second correction and compensation unit separately. A first end of the fourth intermediate frequency unit is electrically connected to the first correction unit. A second end of the fourth intermediate frequency unit is electrically connected to the first radio frequency unit. A first end of the fifth intermediate frequency unit is electrically connected to the second correction unit. A second end of the fifth intermediate frequency unit is electrically connected to the second radio frequency unit.

In the possible implementation, after the baseband processing unit outputs the first service signal to the splitter/combiner unit, the splitter/combiner unit replicates the first service signal and separately transmits the first service signal to the first correction and compensation unit and the second correction and compensation unit. The fourth intermediate frequency unit and the fifth intermediate frequency unit may respectively perform intermediate frequency processing on a first correction signal and a second correction signal that are obtained through correction and compensation, and respectively send the signals on which intermediate frequency processing is performed to the first radio frequency unit and the second radio frequency unit. Then, the first radio frequency unit and the second radio frequency unit each perform radio frequency processing on a corrected service signal. An implementation of the signal transmission apparatus including intermediate frequency units is provided. The fourth intermediate frequency unit and the fifth intermediate frequency unit that belong to different channels may choose to perform differentiated intermediate frequency processing or same intermediate frequency processing on the first service signals, to improve flexibility of the solution.

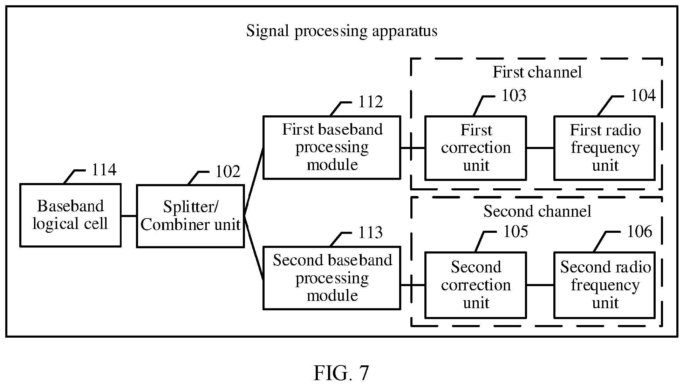

FIG. 7 is a schematic diagram of a structure of a signal transmission apparatus according to this application.

Refer to FIG. 7. The signal transmission apparatus further includes a first baseband processing module 112 and a second baseband processing module 113.

In this application, the baseband processing unit includes a baseband logical cell 114, a first baseband processing module, and a second baseband processing module. The baseband logical cell 114 is electrically connected to a first end of the splitter/combiner unit. A first end of the first baseband processing module and a first end of the second baseband processing module each are electrically connected to a second end of the splitter/combiner unit. A second end of the first baseband processing module is electrically connected to the first correction unit. A second end of the second baseband processing module is electrically connected to the second correction unit. In the possible implementation, an implementation of the signal transmission apparatus is provided, to improve implementability of the solution.

Optionally, in the possible implementation, the signal transmission apparatus may further include a sixth intermediate frequency unit and a seventh intermediate frequency unit. The sixth intermediate frequency unit may be located between the splitter/combiner unit and the first baseband processing module, or may be located between the first baseband processing module and the first correction unit, or may be located between the first correction unit and the first radio frequency unit. This is not specifically limited herein. Similarly, the seventh intermediate frequency unit may be located between the splitter/combiner unit and the second baseband processing module, or may be located between the second baseband processing module and the second correction unit, or may be located between the second correction unit and the second radio frequency unit. This is not specifically limited herein.

This application further provides another signal transmission method and a network system. Similarly, for specific implementations of the signal transmission method and the network system, refer to the signal transmission apparatuses in FIG. 1 to FIG. 6. Details are not described herein again.

The technical solutions provided in embodiments of this application may be fully or partially implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like. In embodiments of this application, when there is no logical conflict, embodiments may be mutually referenced.

The foregoing describes in detail the signal transmission apparatus and the signal transmission method provided in embodiments of this application. The principle and the implementations of this application are described herein by using specific examples. The descriptions about the foregoing embodiments are merely used to help understand the method and core ideas of this application. In addition, a person of ordinary skill in the art may make variations and modifications to this application in terms of the specific implementations and application scopes based on the ideas of this application. In conclusion, the content of this specification shall not be construed as a limitation on this application.

## Claims

1. A signal transmission apparatus, wherein the signal transmission apparatus comprises: a baseband processing unit, a splitter/combiner unit, a first channel, and a second channel, the first channel comprises a first correction unit and a first radio frequency unit, and the second channel comprises a second correction unit and a second radio frequency unit;

   a first end of the first correction unit is electrically connected to the splitter/combiner unit, and a second end of the first correction unit is electrically connected to the first radio frequency unit;
   the baseband processing unit is configured to generate a first service signal;
   the splitter/combiner unit is configured to replicate the first service signal;
   the first correction unit is configured to correct the first service signal by using a first correction coefficient, to obtain a second service signal;
   the second correction unit is configured to correct the first service signal by using a second correction coefficient, to obtain a third service signal;
   the first radio frequency unit is configured to perform radio frequency processing on the second service signal; and

   the second radio frequency unit is configured to perform radio frequency processing on the third service signal.

2. The signal transmission apparatus according to claim 1, wherein

   the baseband processing unit is further configured to generate a first calibration signal;
   the first correction unit is further configured to correct the first calibration signal by using a third correction coefficient, to obtain a first correction signal;
   the first radio frequency unit is further configured to perform radio frequency processing on the first correction signal, to obtain a first radio frequency signal;
   the second radio frequency unit is further configured to receive the first radio frequency signal;
   the second correction unit is further configured to correct the first radio frequency signal by using a fourth correction coefficient, to obtain a second correction signal; and
   the splitter/combiner unit is further configured to select the first channel to send the first radio frequency signal, and select the second channel to receive the first radio frequency signal.

3. The signal transmission apparatus according to claim 2, wherein

   the baseband processing unit is further configured to generate a second calibration signal;
   the second correction unit is further configured to correct the second calibration signal by using a fifth correction coefficient, to obtain a third correction signal;
   the second radio frequency unit is further configured to perform radio frequency processing on the third correction signal, to obtain a second radio frequency signal;
   the first radio frequency unit is further configured to receive the second radio frequency signal;
   the first correction unit is further configured to correct the second radio frequency signal by using a sixth correction coefficient, to obtain a fourth correction signal; and
   the splitter/combiner unit is further configured to select the second channel to send the second radio frequency signal, and select the first channel to receive the second radio frequency signal.

4. The signal transmission apparatus according to claim 3, wherein
   the baseband processing unit is further configured to obtain the first correction coefficient based on the third correction coefficient, the fourth correction coefficient, the fifth correction coefficient, and the sixth correction coefficient, wherein the first correction coefficient is used to compensate for the first channel.

5. The signal transmission apparatus according to claim 3 or 4, wherein
the baseband processing unit is further configured to obtain the second correction coefficient based on the third correction coefficient, the fourth correction coefficient, the fifth correction coefficient, and the sixth correction coefficient, wherein the second correction coefficient is used to compensate for the second channel.

6. The signal transmission apparatus according to any one of claims 1 to 5, wherein the signal transmission apparatus further comprises a first intermediate frequency unit; and
a first end of the first intermediate frequency unit is electrically connected to the baseband processing unit, and a second end of the first intermediate frequency unit is electrically connected to the splitter/combiner unit.

7. The signal transmission apparatus according to any one of claims 1 to 5, wherein the signal transmission apparatus further comprises a second intermediate frequency unit and a third intermediate frequency unit;

a first end of the second intermediate frequency unit is electrically connected to the splitter/combiner unit, and a second end of the second intermediate frequency unit is electrically connected to the first correction unit; and
a first end of the third intermediate frequency unit is electrically connected to the splitter/combiner unit, and a second end of the third intermediate frequency unit is electrically connected to the second correction unit.

8. The signal transmission apparatus according to any one of claims 1 to 5, wherein the signal transmission apparatus further comprises a fourth intermediate frequency unit and a fifth intermediate frequency unit;

a first end of the fourth intermediate frequency unit is electrically connected to the first correction unit, and a second end of the fourth intermediate frequency unit is electrically connected to the first radio frequency unit; and
a first end of the fifth intermediate frequency unit is electrically connected to the second correction unit, and a second end of the fifth intermediate frequency unit is electrically connected to the second radio frequency unit.

9. The signal transmission apparatus according to claims 1 to 5, wherein the baseband processing unit comprises a baseband logical cell, a first baseband processing module, and a second baseband processing module, and the signal transmission apparatus further comprises a sixth intermediate frequency unit and a seventh intermediate frequency unit;

an output end of the baseband logical cell is electrically connected to a first end of the splitter/combiner unit;
a second end of the splitter/combiner unit is electrically connected to a first end of the baseband processing module and a first end of the second baseband processing module;
the first end of the first correction unit is electrically connected to the splitter/combiner unit, and the second end of the first correction unit is electrically connected to the first baseband processing module; and
a first end of the second correction unit is electrically connected to the splitter/combiner unit, and a second end of the second correction unit is electrically connected to the second baseband processing module.

10. A signal transmission method, wherein the signal transmission method is applied to a signal transmission apparatus, the signal transmission apparatus comprises: a baseband processing unit, a splitter/combiner unit, a first channel, and a second channel, the first channel comprises a first correction unit and a first radio frequency unit, and the second channel comprises a second correction unit and a second radio frequency unit;
a first end of the first correction unit is electrically connected to the splitter/combiner unit, and a second end of the first correction unit is electrically connected to the first radio frequency unit; and the method comprises:

generating a first service signal by using the baseband processing unit;
replicating the first service signal by using the splitter/combiner unit;
correcting the first service signal based on a first correction coefficient by using the first correction unit, to obtain a second service signal;
correcting the first service signal based on a second correction coefficient by using the second correction unit, to obtain a third service signal;
performing radio frequency processing on the second service signal by using the first radio frequency unit; and
performing radio frequency processing on the third service signal by using the second radio frequency unit.

**11.** The signal transmission method according to claim 10, wherein the method further comprises:

generating a first calibration signal by using the baseband processing unit;
correcting the first calibration signal based on a third correction coefficient by using the first correction unit, to obtain a first correction signal;
performing radio frequency processing on the first correction signal by using the first radio frequency unit, to obtain a first radio frequency signal;
receiving the first radio frequency signal by using the second radio frequency unit;
correcting the first radio frequency signal based on a fourth correction coefficient by using the second correction unit, to obtain a second correction signal; and
selecting the first channel to send the first radio frequency signal and selecting the second channel to receive the first radio frequency signal by using the splitter/combiner unit.

**12.** The signal transmission method according to claim 11, wherein the method further comprises:

generating a second calibration signal by using the baseband processing unit;
correcting the second calibration signal based on a fifth correction coefficient by using the second correction unit, to obtain a third correction signal;
performing radio frequency processing on the third correction signal by using the second radio frequency unit, to obtain a second radio frequency signal;
receiving the second radio frequency signal by using the first radio frequency unit;
correcting the second radio frequency signal based on a sixth correction coefficient by using the first correction unit, to obtain a fourth correction signal; and
selecting the second channel to send the second radio frequency signal and selecting the first channel to receive the second radio frequency signal by using the splitter/combiner unit.

**13.** The signal transmission method according to claim 12, wherein the method further comprises:
obtaining the first correction coefficient based on the third correction coefficient, the fourth correction coefficient, the fifth correction coefficient, and the sixth correction coefficient by using the baseband processing unit, wherein the first correction coefficient is used to compensate for the first channel.

**14.** The signal transmission method according to claim 12 or 13, wherein the method further comprises:

obtaining the second correction coefficient based on the third correction coefficient, the fourth correction coefficient, the fifth correction coefficient, and the sixth correction coefficient by using the baseband processing unit, wherein the second correction coefficient is used to compensate for the second channel.

**15.** The signal transmission method according to any one of claims 10 to 14, wherein the signal transmission apparatus further comprises a first intermediate frequency unit; and
a first end of the first intermediate frequency unit is electrically connected to the baseband processing unit, and a second end of the first intermediate frequency unit is electrically connected to the splitter/combiner unit.

**16.** The signal transmission method according to any one of claims 10 to 14, wherein the signal transmission apparatus further comprises a second intermediate frequency unit and a third intermediate frequency unit;

a first end of the second intermediate frequency unit is electrically connected to the splitter/combiner unit, and a second end of the second intermediate frequency unit is electrically connected to the first correction unit; and
a first end of the third intermediate frequency unit is electrically connected to the splitter/combiner unit, and a second end of the third intermediate frequency unit is electrically connected to the second correction unit.

**17.** The signal transmission method according to any one of claims 10 to 14, wherein the signal transmission apparatus further comprises a fourth intermediate frequency unit and a fifth intermediate frequency unit;

a first end of the fourth intermediate frequency unit is electrically connected to the first correction unit, and a second end of the fourth intermediate frequency unit is electrically connected to the first radio frequency unit; and
a first end of the fifth intermediate frequency unit is electrically connected to the second correction unit, and a second end of the fifth intermediate frequency unit is electrically connected to the second radio frequency unit.

**18.** The signal transmission method according to any one of claims 10 to 15, wherein the baseband processing unit comprises a baseband logical cell, a first baseband processing module, and a second baseband processing module, and the signal transmission apparatus further comprises a sixth intermediate frequency unit and a seventh intermediate frequency unit;

an output end of the baseband logical cell is electrically connected to a first end of the splitter/combiner unit;
a second end of the splitter/combiner unit is electrically connected to a first end of the baseband processing module and a first end of the second baseband processing module;
a first end of the sixth intermediate frequency unit is electrically connected to the splitter/combiner unit, and a second end of the sixth intermediate frequency unit is electrically connected to the first baseband processing module; and
a first end of the seventh intermediate frequency unit is electrically connected to the splitter/combiner unit, and a second end of the seventh intermediate frequency unit is electrically connected to the second baseband processing module.

19. A communication system, wherein the communication system comprises the signal transmission apparatus according to any one of claims 1 to 9.

20. A computer-readable storage medium, wherein the computer-readable storage medium stores instructions, and when the instructions are run on a computer, the computer is enabled to perform the method according to any one of claims 10 to 18.

21. A computer program product, comprising instructions, wherein when the instructions are run on a computer, the computer is enabled to perform the method according to any one of claims 10 to 18.

Signal processing apparatus

First channel

103

First correction
unit

104

First radio
frequency unit

101

Baseband
processing unit

102

Splitter/Combiner
unit

Second channel

105

Second
correction unit

106

Second radio
frequency unit

FIG. 1

Signal processing apparatus

First channel

103

First correction
unit

104

First radio
frequency unit

101

Baseband
processing unit

102

Splitter/Combiner
unit

Second channel

105

Second
correction unit

106

Second radio
frequency unit

FIG. 2

Signal processing apparatus

First channel

103

First correction unit

104

First radio frequency unit

101

Baseband processing unit

102

Splitter/Combiner unit

Second channel

105

Second correction unit

106

Second radio frequency unit

FIG. 3

Signal processing apparatus

First channel

103

First correction unit

104

First radio frequency unit

101

Baseband processing unit

107

First intermediate frequency unit

102

Splitter/ Combiner unit

Second channel

105

Second correction unit

106

Second radio frequency unit

FIG. 4

FIG. 5

FIG. 6

Signal processing apparatus

First channel

First baseband processing module — 112

First correction unit — 103

First radio frequency unit — 104

Baseband logical cell — 114

Splitter/ Combiner unit — 102

Second channel

Second baseband processing module — 113

Second correction unit — 105

Second radio frequency unit — 106

FIG. 7

## INTERNATIONAL SEARCH REPORT

| International application No. |
|---|
| **PCT/CN2022/120490** |

### A. CLASSIFICATION OF SUBJECT MATTER

H04B 17/11(2015.01)i

According to International Patent Classification (IPC) or to both national classification and IPC

### B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

WPI, EPODOC, CNPAT, CNKI: 射频拉远单元, 室内基站, 微RRU, 通道, 通路, 信道, 互异性, 补偿, 校正, 校准, 合路, 分路, 功分, 复制, remote radio unit, RRU, pRRU, pico, channel, compensation, correction, combiner, splitter

### C. DOCUMENTS CONSIDERED TO BE RELEVANT

| Category* | Citation of document, with indication, where appropriate, of the relevant passages | Relevant to claim No. |
|---|---|---|
| X | CN 106330350 A (HUAWEI TECHNOLOGIES CO., LTD.) 11 January 2017 (2017-01-11) description, paragraphs [0082]-[0154] | 1-21 |
| A | US 2016197745 A1 (HUAWEI TECHNOLOGIES CO., LTD.) 07 July 2016 (2016-07-07) entire document | 1-21 |
| A | CN 107395533 A (SHANGHAI HUAWEI TECHNOLOGIES CO., LTD.) 24 November 2017 (2017-11-24) entire document | 1-21 |
| A | CN 103457651 A (HUAWEI TECHNOLOGIES CO., LTD.) 18 December 2013 (2013-12-18) entire document | 1-21 |
| A | CN 113055058 A (ZTE CORP.) 29 June 2021 (2021-06-29) entire document | 1-21 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 November 2022** | **30 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/120490**

| Patent document cited in search report | | | Publication date (day/month/year) | Patent family member(s) | | | Publication date (day/month/year) |
|---|---|---|---|---|---|---|---|
| CN | 106330350 | A | 11 January 2017 | WO | 2017000895 | A2 | 05 January 2017 |
| | | | | ES | 2769069 | T3 | 24 June 2020 |
| | | | | EP | 3301832 | A2 | 04 April 2018 |
| | | | | US | 2018123666 | A1 | 03 May 2018 |
| US | 2016197745 | A1 | 07 July 2016 | CN | 104468425 | A | 25 March 2015 |
| | | | | WO | 2015035948 | A1 | 19 March 2015 |
| | | | | EP | 3043524 | A1 | 13 July 2016 |
| CN | 107395533 | A | 24 November 2017 | | None | | |
| CN | 103457651 | A | 18 December 2013 | JP | 2015519843 | A | 09 July 2015 |
| | | | | WO | 2013177961 | A1 | 05 December 2013 |
| | | | | US | 2015085690 | A1 | 26 March 2015 |
| CN | 113055058 | A | 29 June 2021 | WO | 2021129098 | A1 | 01 July 2021 |

Form PCT/ISA/210 (patent family annex) (January 2015)

**EP 4 391 418 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111234396